# EUROPEAN PATENT SPECIFICATION

(11) **EP 3 246 814 B1**
(45) Date of publication and mention of the grant of the patent: **28.11.2018**
(21) Application number: 16169818.8
(22) Date of filing: 16.05.2016
(51) Int. Cl.: G06F 7/506

(54) **LOGIC CIRCUIT**
LOGISCHE SCHALTUNG
CIRCUIT LOGIQUE

(43) Date of publication of application: 22.11.2017
(73) Proprietor: Hitachi, Ltd., Chiyoda-ku, Tokyo 100-8280 (JP); Yissum Research Development Company of the Hebrew University of Jerusalem Ltd., 9139002 Jerusalem (IL); Université de Liège, 4000 Liège (BE)
(72) Inventor: Gonzalez-Zalba, Miguel Fernando, Cambridge, Cambridgeshire CB43BB (GB); Kaxiras, Stefanos, 753 20 Uppsala (SE); Själander, Magnus, 7011 Trondheim (NO); Remacle, Françoise, 4020 Jupille (BE); Klymenko, Mykhailo, 62300 Dergachi (UA); Levine, Raphael D., Jerusalem 93117 (IL)
(74) Representative: Piotrowicz, Pawel Jan Andrzej

(56) References cited:
- Magnus Själander ET AL: "Improving Error-Resilience of Emerging Multi-Value Technologies", , 4 May 2016 (2016-05-04), XP055316324, http://urn.kb.se/resolve?urn=urn:nbn:se:uu :diva-280026 Retrieved from the Internet: URL:http://www.diva-portal.org/smash/get/d iva2:909551/FULLTEXT01.pdf [retrieved on 2016-11-03]
- SJALANDER MAGNUS ET AL: "A tunable cache for approximate computing", 2014 IEEE/ACM INTERNATIONAL SYMPOSIUM ON NANOSCALE ARCHITECTURES (NANOARCH), IEEE, 8 July 2014 (2014-07-08), pages 88-89, XP032630173, DOI: 10.1109/NANOARCH.2014.6880480 [retrieved on 2014-08-19]
- ADRIAN SAMPSON ET AL: "Approximate storage in solid-state memories", MICROARCHITECTURE, ACM, 2 PENN PLAZA, SUITE 701 NEW YORK NY 10121-0701 USA, 7 December 2013 (2013-12-07), pages 25-36, XP058036231, DOI: 10.1145/2540708.2540712 ISBN: 978-1-4503-2638-4
- Hurst: "Multiple-Valued Logic-its Status and its Future", IEEE Transactions on Computers, 1 January 1984 (1984-01-01), pages 1160-1179, XP055316304, DOI: 10.1109/TC.1984.1676392 Retrieved from the Internet: URL:http://ieeexplore.ieee.org/ielx5/12/35 234/01676392.pdf?tp=&arnumber=1676392&isnu mber=35234

## Description

### Field of the Invention

The present invention relates to a logic circuit particularly, but not exclusively for use in approximate computing.

### Background

Relentless miniaturization of electronic circuits leads to increased variability and greater chance of intermittent faults and soft error in logic circuits. Designing systems that assure 100% computational reliability is costly both in terms of performance and power.

### Reference is made to:

Jie Han and M. Orshansky. Approximate computing: An emerging paradigm for energy-efficient design. In Proceedings of the IEEE European Test Symposium, pages 1-6, May 2013;
Adrian Sampson, Jacob Nelson, Karin Strauss, and Luis Ceze. Approximate storage in solid-state memories. In Proceedings of the ACM/IEEE Annual International Symposium on Microarchitecture, pages 25-36, December 2013;
M. Själander, N. S. Nilsson, and S. Kaxiras. A tunable cache for approximate computing. In Proceedings of the IEEE International Symposium on Nanoscale Architecture, pages 88-89, July 2014;
H. Esmaeilzadeh, A. Sampson, L. Ceze, and D. Burger. Architecture support for disciplined approximate programming. In Proceedings of the Architectural Support for Programming Languages and Operating Systems, pages 301-312, 2012; and
A. Sampson, W. Dietl, E. Fortuna, D. Gnanapragasam, L. Ceze, and D. Grossman. EnerJ: Approximate data types for safe and general low-power computation. In Proceedings of the ACM SIGPLAN Conference on Programming Language Design and Implementation, pages 164-174, June 2011
Magnus Sjalander ET AL: "Improving Error-Resilience of Emerging Multi-Value Technologies", 4 May 2016 (2016-05-04), XP055316324, http://urn.kb.se/resolve?urn=urn:nbn:se:uu:diva-280026, describes an architecture based on multi-value devices which permits trading energy efficiency against error resilience. Important data may be encoded in a more robust binary format while error tolerant data may be encoded in a quaternary format.

### Summary

The invention seeks to provide arrangement which allowing trading of performance and power against the accuracy of logic operations, storage, and data movement by the way the data are encoded in a multivalued digital technology including, but not limited to, single-electron devices such as a single-electron transistor (SET) and a single-atom transistor. Critical data requiring high precession (such as, for example, address computations and branch conditions, size of an image) are encoded in a binary format, which separate two states used for the encoding and, thus, decrease the likelihood that one state would be mistaken by the other. Less critical data (such as, for example, an individual pixel in an image) are encoded in a multi-value (for example, quaternary) format that use all available states and, thus, require fewer resources, leading to reduced power and improved performance. The states of the multi-value format have less separation and, thus, are more sensitive to variation and noise leading to a higher probability for an intermittent error to occur.

Thus, performance and energy efficiency can be improved by employing a system where the level of accuracy can be controlled such that resources are only spent on critical operations.

According to an aspect of the invention there is provided a system for processing and/or storing numbers, each number comprising a plurality of digits. The system includes a logic circuit. The logic circuit includes a plurality of logic blocks. Each logic block is operable in a first number base which is binary and a second, different number base having more than two logic levels. Each logic block is arranged to receive at least one digit in a respective number base. The logic circuit also includes a controller arranged to cause each logic block to output a result in its respective number base. The system also includes a module configured to modulate the precision of encoding the numbers. The module is configured to, in dependence upon a number is a precise type, to encode all the digits of the number in the first number base. The module is configured to, in dependence upon a number is an approximate type, to encode all of the digits of the number in the second number base. The module is configured to, in dependence upon a number is a mixed-encoded type, to encode some of the digits of the number in the first number base and the remaining digits in the second number base.

Each logic block may include at least one electronic device capable of exhibiting a number, N, of logic levels, where N is a positive real integer greater than two. N may be 2ⁿ where n > 2 (e.g. n = 2 or n =3). N may four, i.e. quaternary logic levels. N may be six or eight, i.e. base-6 or base-8 number bases.

Each number base may use some or all of the N logic levels to represent a digit in that number base. The number of logic levels may be less than or equal to N. The logic levels may correspond to physical states of the electronic device. The physical states may be stable, metastable or quasi-stable. The physical states may be current and/ or voltage states. The physical states may be charge, spin, polarisation or magnetisation states. Each logic block may be operable in three or more number bases, each number base having a corresponding number of logic levels.

The at least one electronic device may include at least one single-charge device.

The logic circuit may include an adder. The logic circuit may include a carry-lookahead adder, for example a Kogge-Stone adder. The at least one logic block may include at least one generate and propagate gate. The adder may be a carry select adders. The adder may be a Brent Kung adder. The adder may be a Kogge-Stone adder.

The controller may be configured to cause the logic blocks to output a result as a plurality of digits corresponding to one or more numbers, wherein each digit is in one of first number base or the second number base.

Output numbers may include same, more or fewer digits as input numbers. With reference to the least significant digit, the number base for digits of output numbers correspond to the number base for corresponding digits of input numbers.

The first number base may be binary and the second number base may be N-valued, where N is a positive real integer greater than two. N may be 2ⁿ where n>2. The second number base may be quaternary. The first number base may be binary and the second number base may be base-6. The first number base may be binary and the second number base may be base-8. The first number base may be quaternary and the second number base may be base-8. The first number base may encode a binary zero and a binary one using the minimum and maximum of the N logic levels respectively. The first number base may encode a binary zero and a binary one using the maximum and minimum of the N logic levels respectively. A second number base may encode digits using a number, M, of the N logic levels wherein M < N. The M logic levels used to encode digits may be evenly spaced between the minimum and maximum of the N logic levels.

The first number base and the second number base may have at least one common order of magnitude. For example, base-2 (binary) and base-4 (quaternary) systems have multiple coincident orders of magnitude such as 4=2²=4¹, 16=2⁴=4², 64=2⁶=4³. Base-8 (octal) and base-4 (quaternary) systems also possess coincident orders of magnitude.

According to another aspect of the invention there is provided an approximate computing system including the system.

The system may also include memory including a number of memory blocks. Each memory block includes at least one electronic device capable of exhibiting a number, N, of stable states for providing multiple-valued logic level storage of digits. The memory also includes a memory controller configured to store and/or retrieve digits from the memory blocks, wherein the memory controller is operable in a first number base which is binary and a second, different number base having more than two logic levels.

The first number base may be binary and the second number base may be N-valued. N may be 2ⁿ where n>2. The second number base may be quaternary. The first number base may be binary and the second number base may be base-6. The first number base may be binary and the second number base may be base-8. The first number base may be quaternary and the second number base may be base-8.

The memory controller may be configured to store and/or retrieve a data item as a plurality of digits, wherein the digits are stored and/or retrieved in one of the first number base or the second number base.

### Brief Description of the Drawings

Certain embodiments of the present invention will now be described, by way of example, with reference to the accompanying drawings, in which:
Figure 1 illustrates input to output transfer functions of binary and quaternary device, for example a memory cell or buffer; note the much wider margins for the binary compared to the quaternary device;
Figure 2 illustrates a quaternary device that can operate on binary data; grey regions represent input and output ranges when working with quaternary data and striped regions represent input and output ranges when working with binary data.
Figure 3 show truth tables of quaternary gates with their binary operations highlighted in grey;
Figure 4 illustrates truth tables showing the sum of a quaternary half and full adder.
Grey regions highlight erroneous binary representation;
Figure 5 illustrates a quaternary Kogge-Stone adder with the capability of operating on binary data; unshaded gates perform quaternary operations and shaded gates perform binary operations;
Figure 5a illustrates a quaternary Kogge-Stone adder with the capability of operating on binary data; unshaded gates perform quaternary operations and shaded gates perform binary operations
Figure 6 illustrates circuits for the generate and propagate signals and the computation of the final sum;
Figure 7 illustrates truth tables showing the carry of a quaternary half and full adder;
grey regions highlight binary representation; note that the result is only zero or one since it is the carry that is shown;
Figure 8 illustrates one way of implementing an approximate cache, with eight sets, sixteen approximate q-bytes per cache line (N = 16), and four q-bytes per q-word;
Figure 9 is a bar chart which shows error probabilities for each output bit pair when performing additions with different modes of approximation on a 32-bit Kogge-Stone adder under the assumption of an RBER of 1%;
Figure 10 is a plot which shows output errors of eight benchmarks when the raw bit error rate (RBER) is changed from one in 100 to one in 100 million; whiskers show the maximum and minimum error while the line shows the average for 100 runs;
Figure 11 shows examples of outputs from an imagefill benchmark for different RBER;
Figure 12 shows relative register file (reg) and cache energy when executing approximately;
Figure 13 is a plot which shows output errors when modulating an approximation;
Figure 14 illustrates an inverter;
Figure 15 illustrates truth tables for the inverter shown in Figure 14 when operating in quaternary mode and binary mode; and
Figure 16 shows an input-output device for a device.

### Detailed Description of Certain Embodiments

### 1. Introduction

CMOS technology scaling, the current driver of Moore's law, is faced with practical and fundamental limits. The search for low-power alternatives to CMOS is intensifying with a large number of emerging technologies being investigated, e.g., single atom and single electron transistors [1,2]. Many such technologies present new features, which provide opportunities to develop new computer systems. Multi-level devices are one such common feature [3-5] that is already employed by several commercial memory technologies, e.g., in multi-level flash [Reference 6] and phase change memory [7]. Multilevel devices increase the on-chip information density, as they are capable of representing more than two distinct logical levels. Thus, multi-level devices have the potential of providing smaller, faster, and more energy-efficient circuit implementations as fewer wires, memory cells, and logic gates are required to transfer, store, and process a fixed amount of data. The gain in information density is commonly achieved at the cost of reduced error resilience of the multi-level devices.

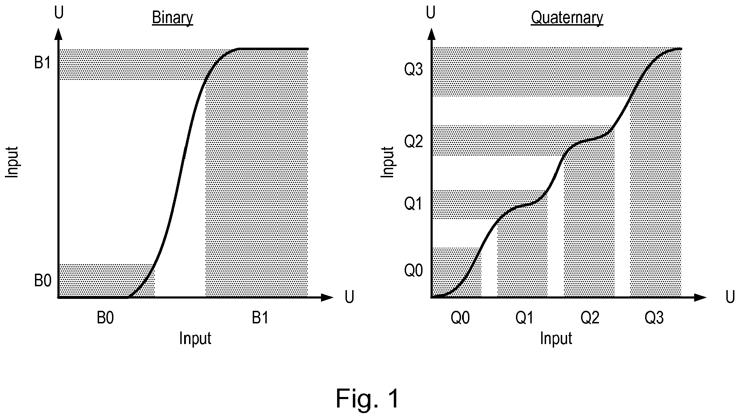

Referring to Figure 1, a multi-level device has more physical states, which reduce the margins between the individual states. Thus, making the device more susceptible to errors. As shown in Figure 1, the separation in voltage or current U between binary states B0, B1 is greater than separation in voltage or current U between adjacent pairs of quaternary states Q0, Q1, Q2, Q3.

There is an increasing research focus on approximate computing, i.e., on trading power, performance, and reliability against each other [8]. Previous work has shown that approximate computing can be used to improve performance and endurance of multi-level phase change memory (PCM) [9].

In accordance with the present invention, an approach is disclosed herein where resilience against errors for multi-value technologies can be modulated simply by the way data are encoded. Approximate computing is leveraged to create an architecture where critical operations and storage of data are represented in a binary and more error resilient format, while less critical operations and data are represented in a quaternary and more compact format. The system is evaluated by running eight different approximate benchmarks while varying the probability that an error manifests to estimate output quality and energy dissipation improvements of the system. It is shown that significant energy reductions can be achieved while still producing adequate results.

### 2. Emerging Nanoelectronics

Referring still to Figure 1, the transfer characteristic shown for a so-called current quantizer [10] is shown, which can be encountered in nanoelectronics and which is considered herein for use in multi-valued logic systems. A current quantizer can be based on the charge states of a single electron transistor (SET) characterized by periodic Coulomb oscillations causing, in turn, a negative differential resistance. The Coulomb oscillations are transformed into a step-wise transfer function by combining the SET with a conventional MOSFET in a simple electrical circuit where the MOSFET serves to stabilize the electrical current through the SET [10]. This is described in more detail hereinafter. Also, quantization of electrical current naturally appears in a single-atom transistor (SAT) [11] where an electron is confined in such a small volume that a discrete energy spectrum within a given charge configuration can be observed. Continued improvements in nanotechnology, making it possible to fabricate smaller objects with better control of their shapes, leads to operating temperatures of SET and SAT that reach room temperature. A recent example is that of a silicon nanowire FET showing Coulomb blockade at room temperature [12].

The two examples, mentioned above, involve control over the charge state by a static gate voltage. Another, more complicated, but also more robust, way to generate a step-wise transfer characteristic is to apply a proper alternating signal to the gate electrode implementing a turnstile single-electron pump. For instance, J. P. Pekola et al. [13] propose a source of quantized electric current based on a SET consisting of two junctions between normal and superconducting metals driven by an alternating gate voltage. In this device, the current between source and drain is a step-wise function of the gate amplitude. K. Nishiguchi et al. [14] implement a step-wise transfer function defined by the electrical current through a charge sensor attached to a quantum box where the number of electrons is controlled by a turnstile single-electron pump. Although all these examples are very different, most of them have a common feature that their step-wise transfer characteristics suffer from thermal noise, shot noise and 1/ f noise caused by the background charge fluctuations. The statistics of these fluctuations can be controlled by temperature or by controlling the electrostatics through a gate electrode. However, the general trend is that better single-electron charge control, allowing to resolve the quantization of electrical current, leads to slower device operation and/or requires a low-temperature regime of operation.
In the SET current quantizer, the most probable bit error associated with those fluctuations is caused by random changes in the electron population of the quantum dot. At low temperatures, these jumps are dominated by the shot noise and 1/fnoise involving changing of the population by a single electron. Therefore, the most probable bit error at reasonably small noise level at the gate electrode of SET is a random jump between adjacent quantization levels. Fluctuations between others levels are less probable. Consequently, operating in the mode when all quantization levels are involved is less robust comparing to the mode when the logic is based on the charge states separated by several units of the charging energy. However, the first case is characterized by higher information density implying less energy dissipation.

### 3. Modulating Error Resilience

A device can be considered where the output can be described as a continuous transfer function of its inputs. For multi-level logic, this transfer function contains plateaus that present a relatively stable output even if the input value varies slightly [15]. These plateaus appear as discrete ranges that can be used to represent logic states. Such devices have higher probability that the output of a device will shift, due to interference, to a nearby level than to a level far away from the expected level. Herein the term "interference" is used for any physical property that affects the output such that it deviates from the ideal transfer function, e.g., input noise or manufacturing variances. Advantage of this property can be taken to create two logic representations for representing approximate and precise data.

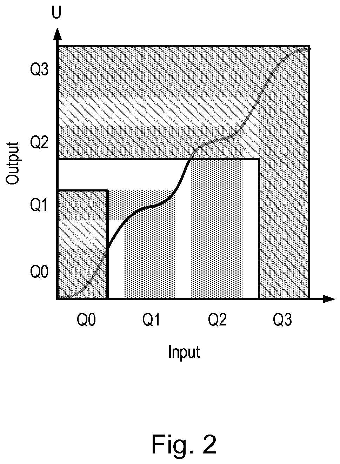

Figure 2 illustrates a transfer function of a quaternary device in some unit (U), e.g., voltage or current. Figure 2 shows four different quaternary states Q0, Q1, Q2, Q3 in light grey, starting from a lowest or minimum state Q0 and increasing in energy to a highest or maximum state Q3 and how they are represented as ranges on the input and output of the device. When representing approximate data, all logic states of the device can be used. This maximizes the amount of data that can be represented per device, but it also increases the probability that a state shifts to a nearby state, for example, the second-highest quaternary state Q2 is interpreted as being third-highest quaternary state Q1 or the highest quaternary state Q3. Precise data is represented in binary form by only using the maximum quaternary state Q3 and minimum quaternary state Q0 as input to the device. When the output is read nearby states are also considered as part of the maximum Q2 and Q3 and minimum Q0 and Q1 states, as shown by the striped or hatched regions. This increases the reliability of the device as the probability is low that Q0 would shift to Q2 or that Q3 would shift to Q1. However, it also requires (at least) twice the number of devices compared to representing the data approximately.

### 4. System Architecture

A system is herein described based on the principal of improved error resilience through the use of performing binary operations on quaternary devices.

### 4.1. Logic and Arithmetic Operations

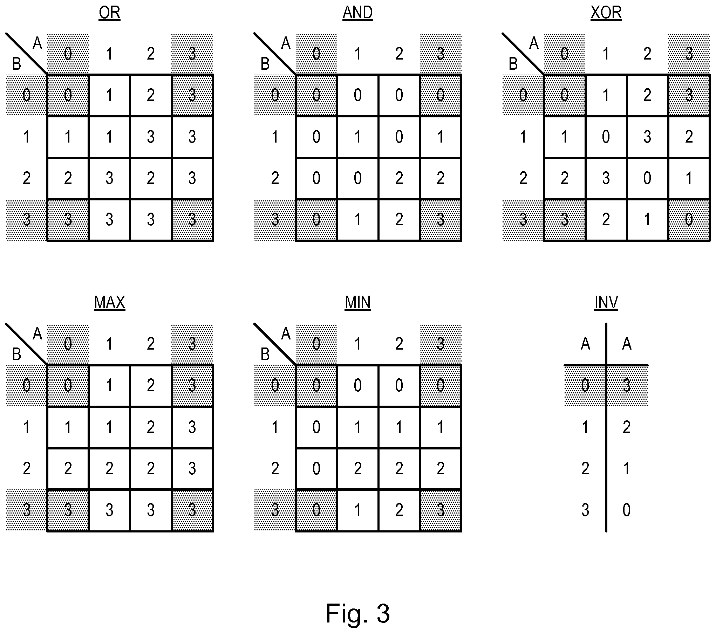

Referring to Figure 3, logical operations on quaternary gates work without any special consideration when operating on binary data. A quaternary zero Q0 also represents a binary zero B0 while a quaternary three Q3 represents a binary one (B1), as highlighted in grey in the figure. In Figure 3, it is apparent that if a '3' in a grey area is replaced with a '1', then the grey areas represent the equivalent binary operation.

Performing additions on binary data using quaternary devices is not as straightforward. Considering the basic operation of a half (HA) and full adder (FA) the sum is not correct for all inputs.

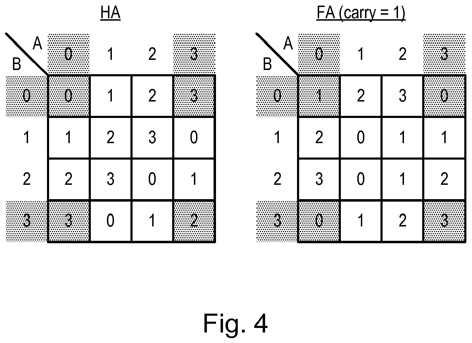

Referring to Figure 4, when adding two binary ones (quaternary three), the resulting sum becomes quaternary two when a quaternary three is instead needed for a correct result. Thus, it is not possible to design a ripple-carry adder simply from full-adder gates. Ripple-carry adders are relatively slow and in most cases a more performant adder implementation is desirable. A carry-lookahead adder (CLA) can be used when implementing high-speed adders. The carry-lookahead technique is based on the creation of a generate (G) and propagate (P) signal for each significance pair of the input operands. The generate and propagate signals are then used to calculate the carry for each digit.

A key insight is that the carry (and the generate and propagate) signal is never anything other than zero or one, regardless, of which base the input operands have. The generate and propagate structure constitutes the majority of all gates in a CLA and all of them perform binary operations. Only the periphery circuits, i.e., the initial generate and propagate circuit and final summation circuit, operate at a higher base.

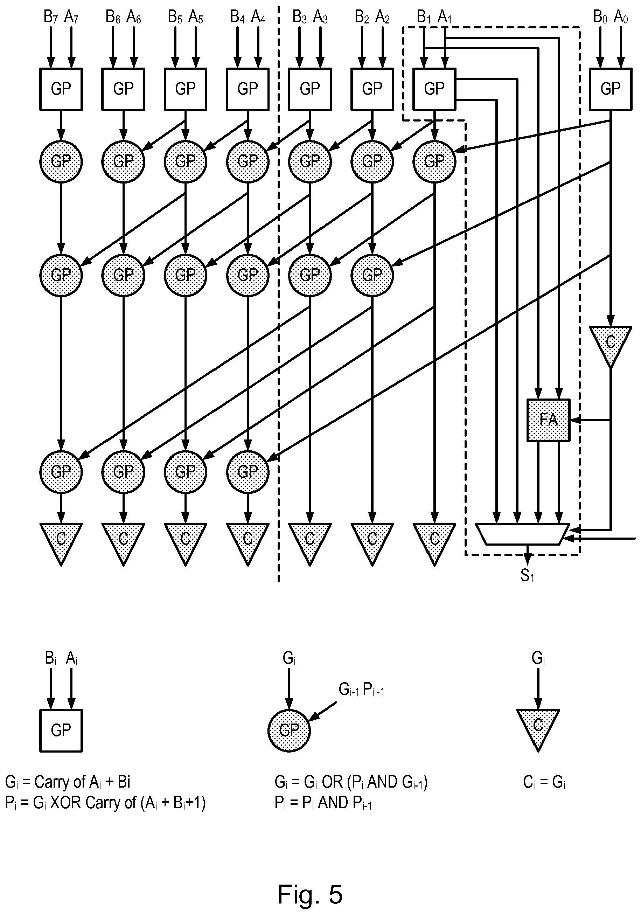

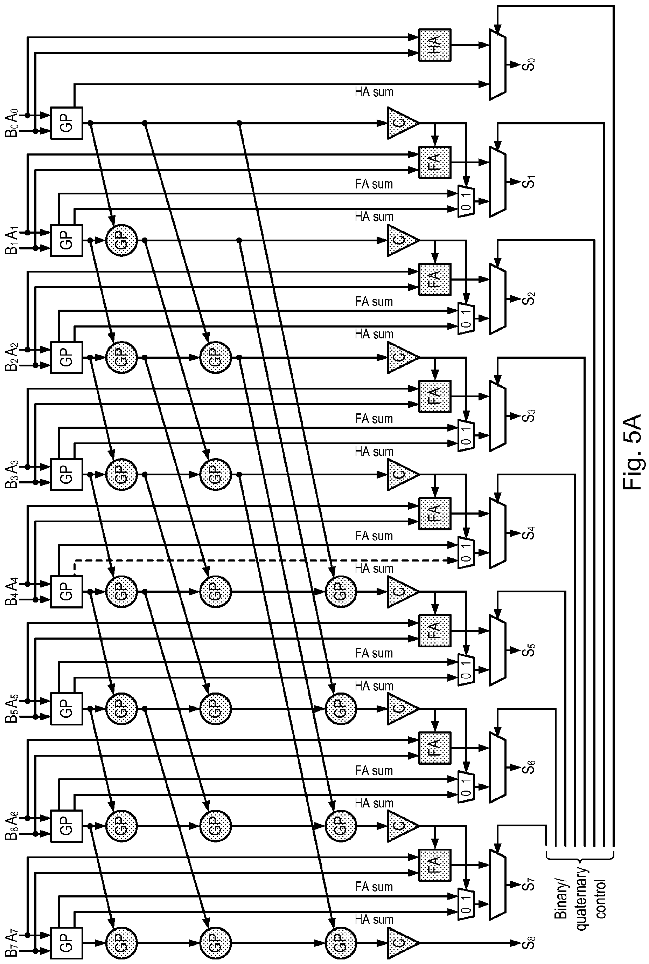

Figure 5 shows a Kogge-Stone [16] CLA that can perform both quaternary and binary additions. Gates in white are quaternary while the gate in grey perform binary operations. An initial generate signal is one when the input-pair of the operands would generate a carry and zero in all other cases, i.e., the carry of an HA. The initial propagate signal is one when the sum of the input-pair is exactly three, i.e., a carry is generated if a carry would come from the next lower significance level, hence the name propagate.

Figure 5A illustrates additional details of an example of a quaternary Kogge-Stone CLA that can perform both quaternary and binary additions. Gates in white are quaternary while the gate in grey perform binary operations.

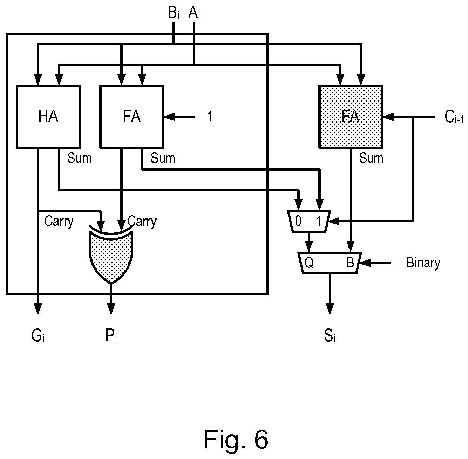

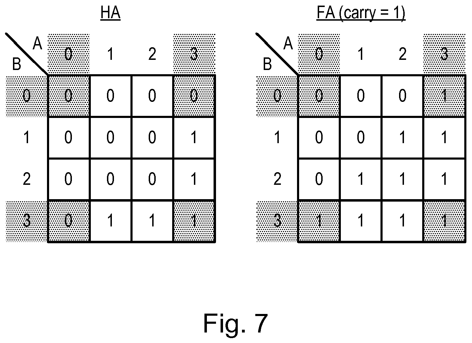

Figure 6 shows how generate and propagate signals can be created using the carries from a quaternary HA and FA (Figure 7). Although the quaternary HA and FA does not generate a correct binary sum (see Figure 4), the binary carry is correct (Figure 7). For multi-level logic systems other than quaternary, for example base-3 or base-6 or higher, in general the HA and FA sum values for an analogous binary encoding will be incorrect, however, the HA and FA sum values will be correct. The Kogge-Stone CLAs shown in Figure 5, Figure 5A or Figure 6 may be readily adapted for a number of logic levels other than four by replacing the quaternary HA and FA that provide the initial generate and propagate values with a HA or FA using the appropriate number of logic levels.

As the quaternary HA and FA does not generate a correct binary sum (see Figure 4) a binary FA and a two-input multiplexor are required for each digit (see Figure 6). The delay through the binary FA can be made equal to that of the quaternary path. The additional multiplexor adds negligible delay to the critical path, since the Binary control signal of the multiplexor is available directly from the start of the addition. Thus, even though the control is a high-fanout signal it will have been applied to the multiplexor before the sums have been calculated.

Subtraction can be handled as in conventional binary implementations by creating the complement of the subtrahend and then perform an addition with the minuend. The complement is created by inverting the subtrahend. Multiplication and division are more challenging and are left as future work. One simple approach is to convert approximate data to precise data, perform the multiplication or division, and then convert it back.

### 4.2 Memory Hierarchy

A cache is based on the idea described in M. Själander et. al. [17]. The memories storing data consist of quaternary memory cells, e.g., the single-electron memory by H. Inokawa et. al. [18].

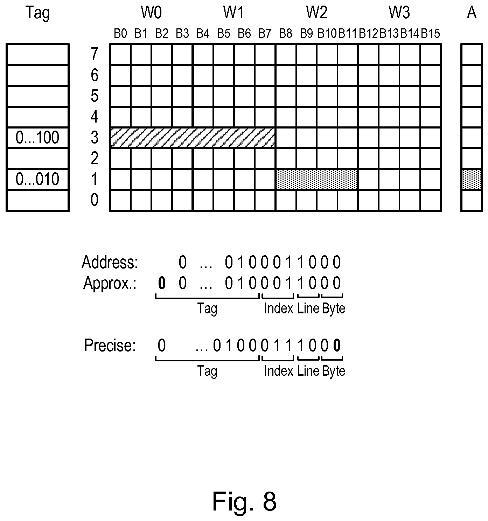

Referring to Figure 8, the cache lines are organized such that each line stores N quaternary bytes (q-byte). Binary bytes (b-byte) can be stored by combining pairs of q-bytes as shown by the striped region of a quaternary word (q-word). In this case, there are eight sets and N = 16.

Addressing memory becomes more complicated when bytes of different size have to coexist in the same memory system. The same address will have to access different physical locations depending on the type of the access (binary or quaternary). When accessing quaternary data, the address matches the granularity of the physical organization and, therefore, does not have to be modified. When accessing binary data, the physical organization does not match, since two q-bytes are needed for one b-byte. Thus, only half the number of b-bytes fit in a cache line, which needs to be reflected by how the data are addressed. This is achieved by shifting the address one step to the left (see Precise in Figure 8). The shift of the address for binary accesses increases the address size. To create equally sized addresses, an approximate address is prepended with a most significant zero (see Approximate in Figure 8). The resulting addressing scheme has the effect that two different addresses could map to the same physical location. To distinguish between the two addresses, a cache line is therefore only allowed to contain one type of data and a bit (A in Figure 8) is used to indicate the type of data that the line contains.

Binary and quaternary data should not be intermixed too finely in the address space to avoid fragmentation with unusable space. For efficient use of available cache space the smallest allocated space for binary or quaternary data should be a whole cache line that is cache line aligned. This is likely smaller than the smallest size that is desirable for main memory. For simplicity, the OS page size can be used as the smallest granularity. Registers can be handled such that even registers can be used to store binary data while all registers can be used to store quaternary data. If an even register (i) holds binary data then the following odd register (i + 1) cannot be used for storing quaternary data. A field for each pair of registers can then be used to indicate if it contains binary data.

### 4.3 Modulating Precision

A desirable property of an approximate computing system is the ability to control the trade-off between precision and energy. Reducing the supply voltage causes a quadratic reduction in power and attempts have therefore been made to overscale the voltage without adjusting the frequency [19]. A significant problem with voltage overscaling is that the precision does not scale gracefully with the voltage. For memory, it is just as likely that the most significant digit will flip as the least significant digit. For arithmetic circuits, the critical path is generally the one for the most significant digit, i.e., when overscaling the voltage it is more likely that an error will manifest at the more significant digits than the less significant digits. Different circuit and implementation techniques have been attempted to more gracefully scale the errors with the voltage through either various error correcting techniques [20] or slack redistribution [21] to avoid affecting the more significant digits.

With the ability to control the error resilience simply by how the data are encoded it is possible to control the precision at the bit level. If the data have no strict constraints on precision then all digits can be encoded as quaternary to minimize the amount of active logic that is required to compute, transfer, and store it. On the other hand, if certain guaranties on precision are required then a suitable number of the more significant digits can be encoded as binary while the less significant digits can be encoded as quaternary. By increasing the number of more significant digits that are encoded as binary the precision can be improved at the cost of more active logic and thus a higher energy dissipation. For logic operations, this trade-off is literally controlled by the encoding of the data without any required modifications of the circuits. To be able to control the precision of an adder (Figure 5) the binary-control signal has to be applied to the appropriate digits. One drawback with the mixed encoding (i.e., both binary and quaternary encoding in the same data word) is that the cache optimization described in Section 4.2 is not possible. Only fully approximate words for which the size becomes half the size of a precise word can benefit from this technique. Mixed-encoded words still benefit from lower energy dissipation as fewer memory cells have to be read and written when accessing the word in the cache.

### 4.4 System

An application should be able to convey information about what type of operation or memory access is to be performed. To avoid the need of a specialized instruction set architecture with both approximate and precise instructions this information is kept together with the data in the architecture. The load instructions are modified such that they specify the number of digits that are encoded quaternary and this information is kept together with the loaded data, for example, the Afield for each cache line and pair of registers in Figure 8. This additional metadata is used to determine the mode (precise or approximate) when accessing data from registers and the caches as well as when performing logic and arithmetic operations. A set of new instructions is introduced to convert between approximate and precise data types. The term "Approx32" is used for this approximate mode to clearly indicate that all digits are quaternary.

The precise representation is not immune to interference and unintentional changes from Q0 to Q1 or from Q3 to Q2 might occur. Depending on a particular technologies probability for this type of change precise data could, e.g., be restored when reading data from the cache (low probability), from the register file (medium probability), or from pipeline registers (high probability).

### 5. Evaluation

EnerJ [22] is used to classify data as either approximate or precise and to simulate the proposed architecture. EnerJ is a type system for Java and enables programmers to specify which data that can be treated approximately. The type system assures that approximate data are guarded in such a way that it does not bleed into and affect precise operations and data.

In the original version of EnerJ data can either be specified as precise or as approximate (by using the @Approx annotation). For this evaluation, this annotation is extended by introducing three new annotations @Approx8, @Approx16, and @Approx24, which enables a programmer to specify the amount of approximation that an application can tolerate. The new types specify how many of the least significant bits of an originally binary data type that are encoded as quaternary, that is, the four least significant digits of an @Approx8 data type are quaternary and the remaining digits are binary. The original @Approx keyword signifies that the whole data type is encoded as quaternary.

The EnerJ classified data are only available within the java runtime environment (JRE) and are not exposed to the architecture itself. Thus, it is not possible to use a conventional architectural simulator in combination with EnerJ. Instead, the architectural modelling needs to be performed within the JRE itself. EnerJ JRE has been extended with the cache model hereinbefore described in Section 4.2 and replaced existing error models with error models for the proposed quaternary technology.

Performing architectural simulations within the EnerJ JRE instead of on an architectural simulator impose limits on the evaluations that can be performed. It is, for example, not possible to accurately determine the timing, as the architectural modelling is not separated from the execution of the application. There is no way of determining how much time is used for executing the application versus the time used for modelling the architectural behaviour. Therefore, only energy aspects are evaluated even though the use of quaternary data improves the hit rate for caches and enables more data to be kept in registers. These improvements would have a positive impact on performance and, thus, improve energy even further than what is being reported.

### 5.1 Benchmarks

Six benchmarks (scimark2 [lu, smm, sor], imagefill, jmeint, and raytrace) are used that been developed together with the EnerJ framework and two benchmarks (sobel and fft) that have been developed to evaluate the proposed architecture. All benchmarks have been annotated with EnerJ's approximate annotations to indicate which data and operations that can be treated approximately by the architecture.

### 5.2 Error Models

Error correcting codes (ECC) are commonly used to protect data stored in memories. This is especially true for multi-value memories (flash, PCM), which have high raw bit error rates (RBER). It is assumed that all data are protected by an ECC that can detect and correct three bits and use the equation by N. Mielke et al. to calculate the effective bit error rate given a RBER [23]. For logical operations, the RBER is applied directly on each bit and use the functional model to estimate the bit error rate for individual bits of additions and subtractions.

A functional model of the Kogge-Stone adder described in Section 4.1 is implemented and used it to create an error model. Errors are injected at the input of the quaternary gates and how these propagate to the final result are observed. The probability for error(s) at the output is then recorded and used for the architectural simulations.

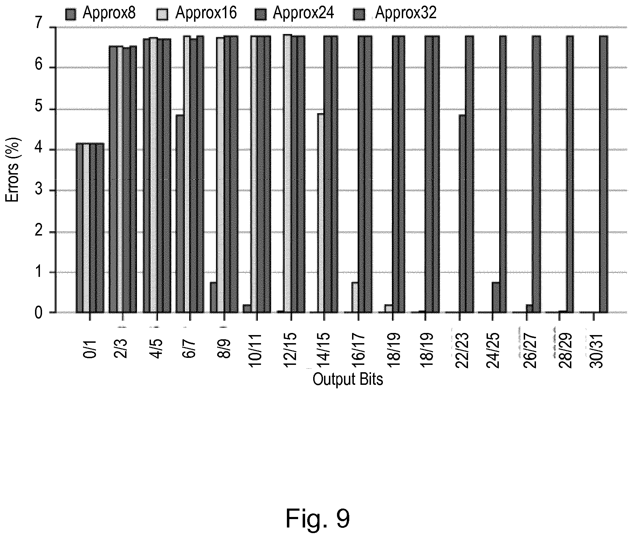

Figure 9 shows an example where the RBER was arbitrarily chosen to be one in 100 (1% chance). Since the output both contains quaternary and binary digits, the data are grouped into bit pairs, for example, 0/ 1 and 2/3. Figure 9 also shows the error probability for the four different modes of approximation (8, 16, 24, and 32 bits encoded quaternary). It is clearly shown that the probability for an error in the more significant digits rapidly decrease at the point where the digits are encoded as binary. Because of the carry chain, it is possible for an error that appears in the quaternary part to propagate into the binary, more significant part. But, the probability for an error in the more significant part is drastically reduced compared to only using the quaternary encoding.

### 5.3 Energy Estimation

Switching gate equivalents are used to estimate the energy of the adder in precise and approximate modes. For the approximate mode, where all digits are quaternary, the gates that switch for creating the initial generate and propagate signals and the final sum are reduced by half. The carry-tree (the grey GP-dots in Figure 5) has a higher switching activity as the generate and propagate signals of the lower half (right side of the dotted line) enters the upper half (left side of the dotted line). This causes switching at the inputs of GP-dots in the upper half, but will not cause any switching of their outputs. For a 32-bit Kogge-Stone adder, 80 of the 129 GP-dots will have inputs that switch. Therefore, the energy of an approximate addition can be conservatively estimated to be 62% (80/ 129) of a precise addition.

**Table 1: Energy Estimate Comparison Between Kogge-Stone and Brent-Kung**

| | Approx8 | Approx16 | Approx24 | Approx32 |
|---|---|---|---|---|
| Kogg-Stone | 124/129 (96%) | 112/129 (87%) | 96/129 (74%) | 80/129 (62%) |
| Brent-Kung | 52/57 (91%) | 46/57 (81%) | 38/57 (67%) | 31/57 (54%) |

Table 1 shows the number of switching gates in the carry-tree of a Kogge-Stone and Brent-Kung adder under different modes of approximation. The energy reduction for the Kogge-Stone is almost 40% when operating on Approx32 data while only a marginal improvement of 4% is achieved when operating on Approx8 data. Kogge-Stone is only one example of a carry-lookahead adder (CLA) and there exist many different organizations in terms of number of gates and connectivity that trade speed, power, and area against each other. For the approximate adder herein described, the connectivity between less significant parts to more significant parts also matters as it will determine how much of the carry tree is active during the different approximate modes. Other suitable CLA configurations are possible. This includes a Brent-Kung adder that reduces the switching activity compared to the Kogge-Stone. For Approx32 operations, the energy almost reaches the ideal reduction of 50% and for Approx8, a more substantial reduction of almost 10% is seen. Unless it is explicitly mentioned the presented data are with the Kogge-Stone results.

The cache has to be designed in such a way that data of variable width can be read from it to save energy. This can be achieved by designing the cache such that most modes of operations access two SRAM memories while during the Approx32 mode only one of the SRAMs is accessed. The energy savings is estimated by modelling a single way of a cache with a 4kB data array and 32-byte cache line size. The tag array is modelled as a 128 byte SRAM with a 32- bit wide port. According to CACTI [24] (version 6.5) the energy dissipation of the tag array is 32% of the data array (when using the 32nm ITRS-HP technology at 350K and optimizing for energy). The estimate of a 2kB 16-bit wide data array the energy dissipation is estimated to be 52.4% of the 4kB data array (100%). Designing the cache with two 16-bit SRAMs instead of a single 32-bit SRAM incurs a slight overhead of 4% ((32%+ 2 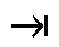 52.4%)/ (32% + 100%)) for precise accesses while Approx32 accesses only dissipate 64% ((32% + 52.4%)/ (32% + 100%)). For the main memory, there is no saving in terms of access power as a whole cache line is read and written at a time. The benefit of having Approx32 data is that twice the number of data items are read/written than compared to precise data. This reduces the total number of required accesses to main memory, which saves energy. The energy gain is scaled with the number of bits that are accessed when accessing data for other approximate modes than Approx32, i.e., Approx8 access 28 of the 32 memory cells in a precise word.

### 6. Results

Results are presented without modulating the approximation (fixed approximation), i.e., only Approx32 is used. This identifies the best possible energy reduction that can be achieved when using the proposed system. Next, results are presented when trading energy against precision by modulating the approximation.

### 6.1 Fixed Approximation

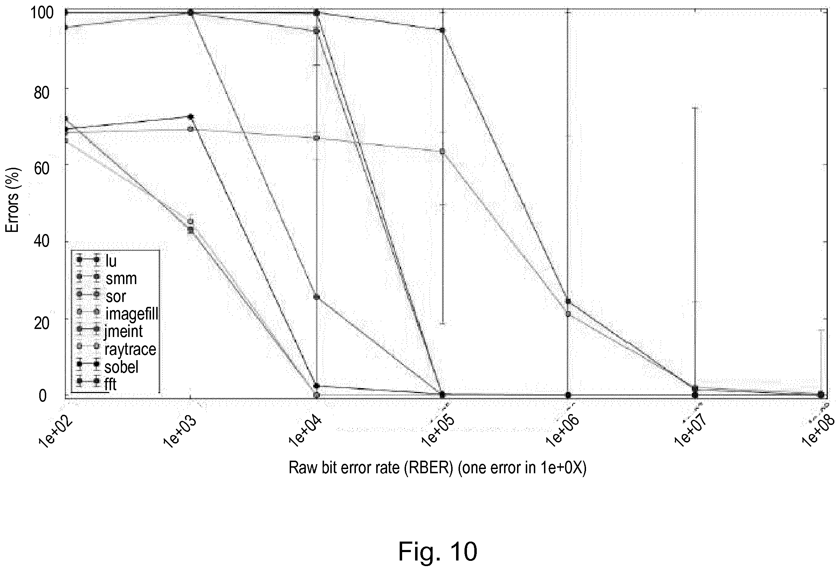

Figure 10 shows the correctness of the output for the eight benchmarks when the REBR is changed from one error in 100 to one in 100 million. Each benchmark was run 100 times for each REBR and the graph shows the average, minimum, and maximum correctness. As seen in figure 10, six of the benchmarks produce correct results for all 100 runs at an REBR of one in 100,000. However, for imagefill and fft, an REBR of one in 100 million is needed to get close to reliable outputs. An REBR of one in 10-100 million has been reported for both PCM and Flash [23, 25-27]. The results indicate that a quaternary technology would have to reach at least this level of correctness for it to be viable.

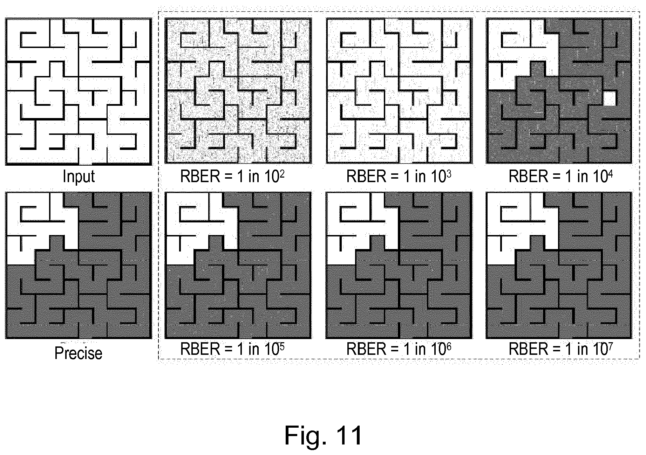

Figure 11 shows the output of a randomly selected run from imagefill under varying RBER. The result for an error rate of one in 100 or 1,000 is not usable, but already at an error rate of 1 in 10,000 the result could be of use in certain situations. So even though imagefill does present errors for an RBER of one in 10 million (the particular run in Figure 11 had a single error) the result can be useful.

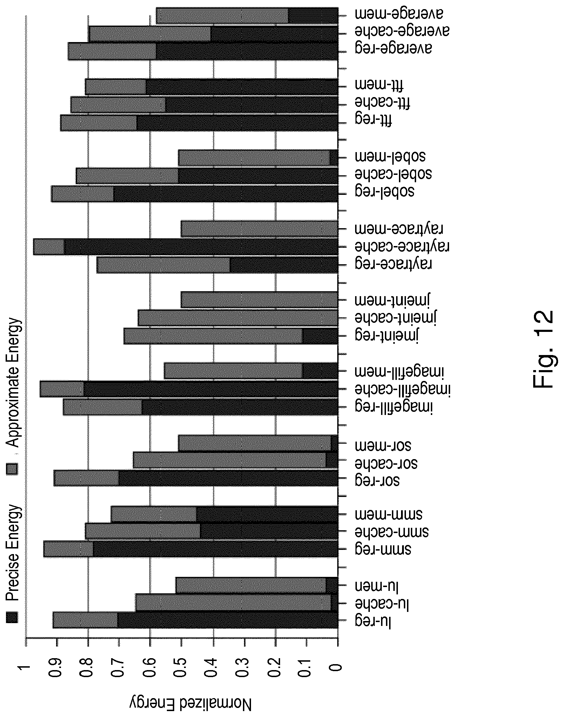

Figure 12 shows the energy usage for the register file and cache normalized to a system which would only use precise operations. The average register file, cache energy, and main memory savings are 14%, 20%, and 32%, respectively. Jmeint shows the greatest improvement with 32% registerfile, 36% cache, and 50% main-memory energy savings. This is due to the high fraction of data that can be treated approximately in jmeint. The reason for main memory showing the greatest improvement is due to locality of the different types of data. Precise data tend to be constants and consist of a smaller working set, which fits in the cache. While approximate data tends to be arrays that are strided with less temporal locality. The more compact representation of approximate data makes it possible to store more data in the cache. This improves the miss rate and, thus, reduces the number of accesses to main memory.

Table 2 shows the miss rate for the modelled level one (L1) data cache (DC), 4-way, 16KiB, with 32- byte line size. The column denoted original shows the miss rate for the eight benchmarks when approximate computing is not used. The last column shows the improvements in miss rate that are achieved when storing data approximately in the cache. For most of the benchmarks the improvements are close to 50% while for fft almost all cache misses can be avoided as the working set now fits in the L1 DC when storing it approximately. The reduced miss rate has the effect of fewer main memory accesses, which improves both energy efficiency (see Figure 12) and performance.

Only three of the benchmarks use approximate integer operations (imagefill, sobel, and fft). The energy for arithmetic operations is reduced by 11%, 23%, and 16% for imagefill, sobel, and fft, respectively.

**Table 2: L1 DC Miss Rate**

| **Benchmark** | **Original (%)** | **Approximate (%)** | **Improvement (%)** |
|---|---|---|---|
| lu | 5.13 | 2.67 | 48 |
| smm | 7.09 | 4.37 | 38 |
| sor | 2.13 | 1.08 | 49 |
| imagefill | 18.21 | 17.89 | 2 |
| jmeint | 1.30 | 0.65 | 50 |
| raytrace | 0.50 | 0.25 | 50 |
| sobel | 0.10 | 0.05 | 50 |
| fft | 1.65 | 0.02 | 99 |

### 6.2 Modulated Approximation

The fft application is used to evaluate the benefits of modulating the approximation. The reason for only using fft is that it is the only application that only use integer operations (most benchmarks use floating point) to include the effect of the adder and that operate on 32-bit wide data (both imagefill and sobel operate on pixels with 8-bit values).

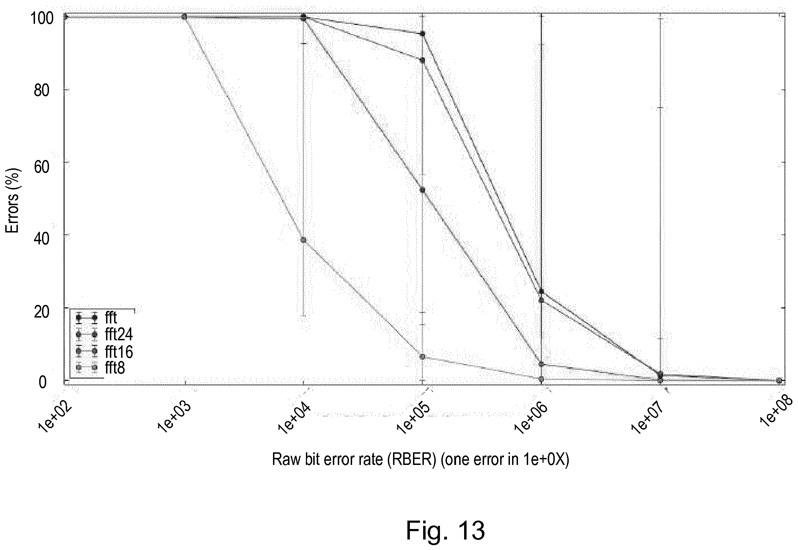

Figure 13 shows how modulating the approximation affects the amount of errors in the output of the application. FFT is the same as shown in Figure 10 and require an REBR of 1 in 100 million to not provide any errors in the case herein described. Using Approx24 instead of Approx32 does hardly provide any benefit at all as the two curves tracks each other closely (fft24 and fft, respectively). However, when reducing the approximation to Approx16 the amount of errors in the output is significantly reduced and an RBER of 1 in 10 million might be acceptable for some use cases. Reducing the approximation further to Approx8 another magnitude increase in the REBR could be acceptable.

Table 3 shows the energy reduction for arithmetic operations and the memory system when modulating the approximation. Here the energy estimates for the Brent- Kung adder are used instead of the Kogge-Stone as it shows better results when modulating the approximation. This is why the Approx32 results in a reduction of 28 % instead of 16%, as reported in Section 6.1.

**Table 3: Energy Estimate for fft when Modulating the Approximation.**

| | Approx8 | Approx16 | Approx24 | Approx32 |
|---|---|---|---|---|
| Arithmetic | 94% | 88% | 80% | 72% |
| Register | 95% | 90% | 86% | 81% |
| Cache | 94% | 88% | 82% | 77% |
| Memory | 95% | 90% | 86% | 81% |

The processor design enables software optimizations where the criticality of operations and data can be specified and to which the hardware can adapt in order to minimize the power dissipation of a digital/ computer system.

The arrangement can be used in hardware based on multivalued technologies including but not limited to Single Electron Transistors or Single Atom Transistors.

The invention provides the means to trade performance and power against the accuracy of logic operations, storage, and data movement by the way the data are encoded in a multivalued digital technology (including but not limited to single-electron devices such as the Single-Electron Transistor and the Single-Atom Transistor). Critical data requiring high precession (e.g., address computations and branch conditions, size of an image) are encoded in a binary format, which separate the two states used for the encoding and, thus, decrease the likelihood that one state would be mistaken by the other. Less critical data (e.g., an individual pixel in an image) are encoded in a multi-value (e.g., quaternary) format that use all available states and, thus, require fewer resources, leading to reduced power and improved performance. The states of the multi-value format have less separation and thus are more sensitive to variation and noise leading to a higher probability for an intermittent error to occur.

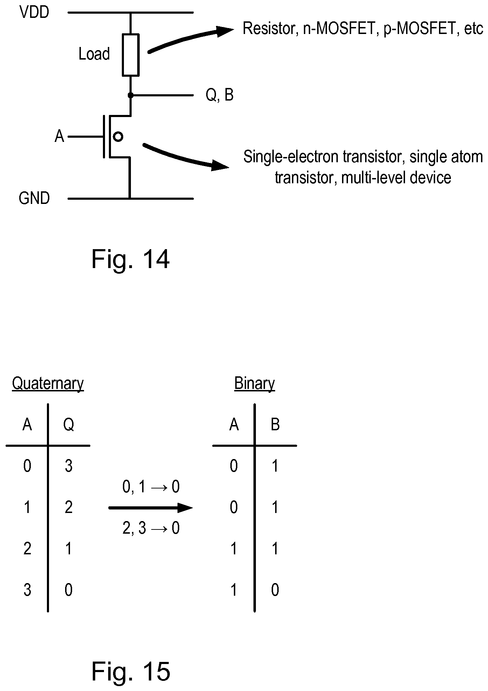

Referring to Figure 14, a physical implementation of a tuneable quaternary-binary logic for approximate computing is shown.

A logic inverter can be used. The pull down network comprises a quaternary device, such as a single-electron transistor or single-atom transistor, and a load, for example a resistive load, a transistor load (n-type or p-type) or a single-electron device load. Vdd is the drive voltage of the network.

Referring also to Figure 15, the voltage inputs (A) are the gate-source voltages on the multi-level device and the voltage outputs (Q or B) are taken at the drain of the multi-level device. In Quaternary mode of operation, four different input can be independently addressed with the correspondent inverter outputs (Q) as explained in the truth table. In Binary mode, the quaternary inputs 0,1 (2,3) are mapped in to binary input B 0(1). This leads to the binary truth table.

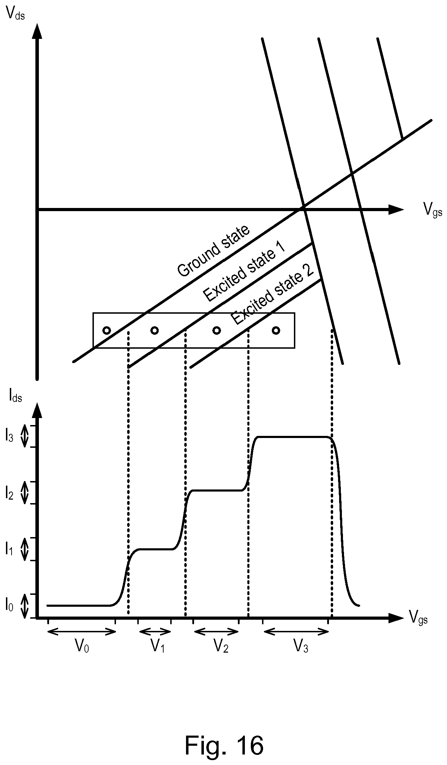

Referring to Figure 16, an input-output diagram of a single multi-level device is shown. The upper diagram indicates the different regions of drain-source current (Ids) as a function of gate-source voltage (Vgs) and drain-source voltage (Vds), i.e. Coulomb blockade. Inside the conducting regions, lines can be identified associated with excited states in the multi-level device. In this case the device presents a ground state, a first and second excited states. When each state enters the bias window the current increases up to a fixed value as can be seen in the lower diagram. Here, Ids is plotted as a function of Vgs at a fixed Vds. Here, in the x-axis, the quaternary voltage inputs V0,1,2,3 can be seen and the noise tolerance on them, indicated by the arrows. Same for the current outputs on the γ-axis, 10,1,2,3.

### References

[1] J. Verduijn, G. C. Tettamanzi, and S. Rogge. Wave function control over a single donor atom. Nano Letters, 13(4):1476-1480, 2013.
[2] V. Deshpande, R. Wacquez, M. Vinet, X. Jehl, S. Barraud, R. Coquand, B. Roche, B. Voisin, C. Vizioz, B. Previtali, L. Tosti, P. Perreau, T. Poiroux, M. Sanquer, B. De Salvo, and O. Faynot. 300 K operating full-CMOS integrated single electron transistor (SET)-FET circuits. In International IEEE Electron Devices Meeting, pages 8.7.1-8.7.4, December 2012.
   The work leading to this invention has received funding from the European Union's Seventh Framework Programme (FP7 2007/2013) under grant agreement n°: 318397.
[3] MV Klymenko and F Remacle. Quantum dot ternary-valued full-adder: Logic synthesis by a multiobjective design optimization based on a genetic algorithm. Journal of Applied Physics, 116(16):164316, 2014.
[4] M Seo, C Hong, S-YLee, HK Choi, N Kim, YChung, V Umansky, and D Mahalu. Multi-valued logic gates based on ballistic transport in quantum point contacts. Scientific reports, 4, 2014.
[5] F Remacle, JR Heath, and RD Levine. Electrical addressing of confined quantum systems for quasiclassical computation and finite state logic machines. Proceedings of the National Academy of Sciences of the United States of America, 102(16):5653-5658, 2005.
[6] Dae-Seok Byeon, Sung-Soo Lee, Young-Ho Lim, Jin-Sung Park, Wook-Kee Han, Pan-Suk Kwak, Dong-Hwan Kim, Dong-Hyuk Chae, Seung-Hyun Moon, Seung-Jae Lee, Hyun-Chul Cho, Jung-Woo Lee, Moo-Sung Kim, Joon-Sung Yang, Young-Woo Park, Duk-Won Bae, Jung-Dal Choi, Sung-Hoi Hur, and Kang-Deog Suh. An 8 Gb multi-level NAND flash memory with 63 nm STI CMOS process technology. In Proceedings of the IEEE International Solid-State Circuits Conference, pages 46-47 Vol. 1, February 2005.
[7] H.-S.P. Wong, S. Raoux, SangBum Kim, Jiale Liang, John P. Reifenberg, B. Rajendran, Mehdi Asheghi, and Kenneth E. Goodson. Phase change memory. Proceedings of the IEEE, 98(12):2201-2227, December 2010.
[8] Jie Han and M. Orshansky. Approximate computing: An emerging paradigm for energy-efficient design. In Proceedings of the IEEE European Test Symposium, pages 1-6, May 2013.
[9] Adrian Sampson, Jacob Nelson, Karin Strauss, and Luis Ceze. Approximate storage in solid-state memories. In Proceedings of the ACM/IEEE Annual International Symposium on Microarchitecture, pages 25-36, December 2013.
[10] Hiroshi Inokawa, Akira Fujiwara, and Yasuo Takahashi. A multiple-valued logic and memory with combined single-electron and metal-oxide-semiconductor transistors. IEEE Transactions on Electron Devices, 50(2):462-470, 2003.
[11] Michael Klein, Gabriel P Lansbergen, Jan A Mol, Sven Rogge, Raphael D Levine, and Francoise Remacle. Reconfigurable logic devices on a single dopant atom-operation up to a full adder by using electrical spectroscopy. ChemPhysChem, 10(1):162-173, 2009.
[12] Romain Lavieville, Fran, cois Triozon, Sylvain Barraud, Andrea Corna, Xavier Jehl, Marc Sanquer, Jing Li, Antoine Abisset, Ivan Duchemin, and Yann-Michel Niquet. Quantum dot made in metal oxide silicon-nanowire field effect transistor working at room temperature. Nano letters, 2015.
[13] Jukka P Pekola, Juha J Vartiainen, Mikko M¨ ott¨ onen, Olli-Pentti Saira, Matthias Meschke, and Dmitri V Averin. Hybrid single-electron transistor as a source of quantized electric current. Nature Physics, 4(2):120-124, 2008.
[14] K. Nishiguchi, Y. Ono, and A. Fujiwara. Operation of silicon single-electron devices at room temperature. NTT Technical Reviews Letters, 5(6):1-6, 2007.
[15] M. Seo, C. Hong, S.-Y. Lee, H. K. Choi, N. Kim, Y. Chung, V. Umansky, and D. Mahalu. Multi-valued logic gates based on ballistic transport in quantum point contacts. Scientific Reports, 4, January 2014.
[16] Peter M Kogge and Harold S Stone. A parallel algorithm for the efficient solution of a general class of recurrence equations. IEEE Transactions on Computers, 100(8):786-793, 1973.
[17] M. Själander, N. S. Nilsson, and S. Kaxiras. A tunable cache for approximate computing. In Proceedings of the IEEE International Symposium on Nanoscale Architecture, pages 88-89, July 2014.
[18] H. Inokawa, A. Fujiwara, and Y. Takahashi. A multiple-valued SRAM with combined single-electron and MOS transistors. In Proceedings of the Device Research Conference, pages 129-130, June 2001.
[19] H. Esmaeilzadeh, A. Sampson, L. Ceze, and D. Burger. Architecture support for disciplined approximate programming. In Proceedings of the Architectural Support for Programming Languages and Operating Systems, pages 301-312, 2012.
[20] Debabrata Mohapatra, Vinay K Chippa, An and Raghunathan, and Kaushik Roy. Design of voltage-scalable meta-functions for approximate computing. In Proceedings of the Conference on Design, Automation and Test in Europe, pages 1-6. IEEE, 2011.
[21] Andrew B Kahng, Seokhyeong Kang, Rakesh Kumar, and John Sartori. Slack redistribution for graceful degradation under voltage overscaling. In Proceedings of the Asia and South Pacific Design Automation Conference, pages 825-831. IEEE, 2010.
[22] A. Sampson, W. Dietl, E. Fortuna, D. Gnanapragasam, L. Ceze, and D. Grossman. EnerJ: Approximate data types for safe and general low-power computation. In Proceedings of the ACM SIGPLAN Conference on Programming Language Design and Implementation, pages 164-174, June 2011.
[23] Neal Mielke, Todd Marquart, Ning Wu, Je Kessenich, Hanmant Belgal, Eric Schares, Falgun Trivedi, Evan Goodness, and Leland R Nevill. Bit error rate in NAND flash memories. In Proceedings of the IEEE International Reliability Physics Symposium, pages 9-19. IEEE, 2008.
[24] Naveen Muralimanohar, Rajeev Balasubramonian, and Norman P. Jouppi. CACTI 6.0: A tool to model large caches. Technical Report HPL-2009-8 5, HP Laboratories, April 2009.
[25] Daniele Ielmini, Andrea L Lacaita, and Davide Mantegazza. Recovery and drift dynamics of resistance and threshold voltages in phase-change memories. IEEE Transactions on Electron Devices, 54(2):308-315, 2007.
[26] S. Yeo, N. H. Seong, and H.-H. S. Lee. Can multi-level cell PCM be reliable and usable? Analyzing the impact of resistance drift. In Proceedings of the Workshop on Duplicating, Deconstructing and Debunking, June 2012.
[27] Yu Cai, Erich F Haratsch, Onur Mutlu, and Ken Mai. Error patterns in MLC NAND flash memory: Measurement, characterization, and analysis. In Proceedings of the Conference on Design, Automation and Test in Europe, pages 521-526. IEEE, 2012

### Modifications

It will be appreciated that many modifications may be made to the embodiments hereinbefore described. Such modifications may involve equivalent and other features which are already known in the design, manufacture and use of approximate computing and multivalued devices parts thereof and which may be used instead of or in addition to features already described herein. Features of one embodiment may be replaced or supplemented by features of another embodiment.

Although claims have been formulated in this application to particular combinations of features, it should be understood that the scope of the disclosure of the present invention also includes any novel features or any novel combination of features disclosed herein either explicitly or implicitly or any generalization thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## Claims

1. A system for processing and/or storing numbers, each number comprising a plurality of digits, the system comprising:
a logic circuit comprising:
a plurality of logic blocks, each logic block operable in a first number base which is binary and a second, different number base having more than two logic levels, each logic block arranged to receive at least one digit in a respective number base; and
a controller arranged to cause each logic block to output a result in its respective number base;
a module configured to modulate the precision of encoding the numbers, the module configured to:
in dependence upon a number is a precise type, to encode all the digits of the number in the first number base;
in dependence upon a number is an approximate type, to encode all of the digits of the number in the second number base;
**characterised in that,** in dependence upon a number is a mixed-encoded type, to encode some of the digits of the number in the first number base and the remaining digits in the second number base.

2. A system according to claim 1, wherein each logic block includes at least one electronic device capable of exhibiting a number, N, of logic levels, where N is a positive real integer greater than two and, optionally, the at least one electronic device comprises at least one single-charge device.

3. A system according to claim 1 or 2, wherein the logic circuit comprises an adder.

4. A system according to any preceding claim, wherein the logic circuit comprises a carry-lookahead adder, optionally a Kogge-Stone adder.

5. A system according to any preceding claim, wherein the at least one logic block comprises at least one generate and propagate gate.

6. A system according to any preceding claim, wherein the controller is configured to cause the plurality of logic blocks to output a result as a plurality of digits corresponding to one or more numbers, wherein each digit is in one of the first number base or the second number base.

7. A system according to any preceding claim, wherein the second number base is N-valued, where N is a positive real integer greater than two, optionally quaternary.

8. A system according to any preceding claim, wherein the first number base and the second number base have at least one common order of magnitude.

9. An approximate computing system comprising a system according to any one of claim 1 to 8.

10. A system according to any one of claims 1 to 8, further comprising memory which comprises:
a plurality of memory blocks, each memory block comprising at least one electronic device capable of exhibiting a number, N, of stable states for providing multiple-valued logic level storage of digits; and
a memory controller configured to store and/or retrieve digits from the memory blocks, wherein the memory controller is operable in a first number base which is binary and a second, different number base having more than two logic levels.

11. A system according to claim 10, wherein the second number base is N-valued, optionally quaternary.

12. A system according to claims 10 or 11, wherein the memory controller is configured to store and/ or retrieve a data item as a plurality of digits, wherein each digit is stored and/or retrieved in one of the first number base or the second number base.

## Patentansprüche

1. System zum Verarbeiten und/oder Speichern von Nummern, wobei jede Nummer eine Vielzahl von Ziffern beinhaltet, wobei das System Folgendes beinhaltet:
eine logische Schaltung, die Folgendes beinhaltet:
eine Vielzahl von logischen Blöcken, wobei jeder logische Block in einer ersten Nummernbasis, die binär ist, und in einer zweiten, unterschiedlichen Nummernbasis, die mehr als zwei logische Ebenen aufweist, betriebsfähig ist, wobei jeder logische Block eingerichtet ist, um mindestens eine Ziffer in einer jeweiligen Nummernbasis zu empfangen; und
eine Steuereinheit, die eingerichtet ist, um zu bewirken, dass jeder logische Block ein Ergebnis in seiner jeweiligen Nummernbasis ausgibt;
ein Modul, das konfiguriert ist, um die Genauigkeit des Codierens der Nummern zu modulieren, wobei das Modul konfiguriert ist, um:
in Abhängigkeit davon, dass eine Nummer ein genauer Typ ist, alle Ziffern der Nummer in der ersten Nummernbasis zu codieren;
in Abhängigkeit davon, dass eine Nummer ein ungefährer Typ ist, alle Ziffern der Nummer in der zweiten Nummernbasis zu codieren;
**dadurch gekennzeichnet, dass** in Abhängigkeit davon, dass eine Nummer ein gemischt codierter Typ ist, einige der Ziffern der Nummer in der ersten Nummernbasis und die verbleibenden Ziffern in der zweiten Nummernbasis zu codieren.

2. System gemäß Anspruch 1, wobei jeder logische Block mindestens eine elektronische Vorrichtung umfasst, die fähig ist, eine Nummer, N, von logischen Ebenen zu zeigen, wobei N eine positive, echte, ganze Zahl ist, die größer als zwei ist, und optional die mindestens eine elektronische Vorrichtung mindestens eine Einzelladungsvorrichtung beinhaltet.

3. System gemäß Anspruch 1 oder 2, wobei die logische Schaltung einen Addierer beinhaltet.

4. System gemäß einem vorhergehenden Anspruch, wobei die logische Schaltung einen Carry-Look-Ahead-Addierer, optional einen Kogge-Stone-Addierer beinhaltet.

5. System gemäß einem vorhergehenden Anspruch, wobei der mindestens eine logische Block mindestens ein Generierungs und Propagierungs-Gate beinhaltet.

6. System gemäß einem vorhergehenden Anspruch, wobei die Steuereinheit konfiguriert ist, um zu verursachen, dass die Vielzahl von logischen Blöcken ein Ergebnis als Vielzahl von Ziffern entsprechend einer oder mehreren Nummern auszugeben, wobei jede Ziffer in einer von der ersten Nummernbasis oder der zweiten Nummernbasis ist.

7. System gemäß einem vorhergehenden Anspruch, wobei die zweite Nummernbasis N-wertig, wobei N eine positive, echte, ganze Zahl ist, die größer als zwei ist, optional quaternär ist.

8. System gemäß einem vorhergehenden Anspruch, wobei die erste Nummernbasis und die zweite Nummernbasis mindestens eine gemeinsame Größenordnung aufweisen.

9. Ungefähres Computersystem, das ein System gemäß einem der Ansprüche 1 bis 8 beinhaltet.

10. System gemäß einem der Ansprüche 1 bis 8, das ferner einen Speicher beinhaltet, der Folgendes beinhaltet:
eine Vielzahl von Speicherblöcken, wobei jeder Speicherblock mindestens eine elektronische Vorrichtung beinhaltet, die fähig ist, eine Nummer, N, von stabilen Zuständen zu zeigen, um Speicherung von Ziffern mit mehrwertiger logischer Ebene bereitzustellen; und
eine Speichersteuereinheit, die konfiguriert ist, um Ziffern von den Speicherblöcken zu speichern und/oder abzurufen, wobei die Speichersteuereinheit in einer ersten Nummernbasis, die binär ist, und einer zweiten, unterschiedlichen Nummernbasis, die mehr als zwei logische Ebenen aufweist, betriebsfähig ist.

11. System gemäß Anspruch 10, wobei die zweite Nummernbasis N-wertig, optional quaternär ist.

12. System gemäß Anspruch 10 oder 11, wobei die Speichersteuereinheit konfiguriert ist, um ein Datenelement als eine Vielzahl von Ziffern zu speichern und/oder abzurufen, wobei jede Ziffer in einer von der ersten Nummernbasis oder der zweiten Nummernbasis gespeichert und/oder abgerufen wird.

## Revendications

1. Système servant à traiter et/ou à stocker des nombres, chaque nombre comportant une pluralité de chiffres, le système comportant :
un circuit logique comportant :
une pluralité de blocs logiques, chaque bloc logique étant en mesure de fonctionner dans une première base de numération qui est binaire et une deuxième base de numération différente ayant plus de deux niveaux logiques, chaque bloc logique étant agencé pour recevoir au moins un chiffre dans une base de numération respective ; et
un contrôleur agencé pour amener chaque bloc logique à faire sortir un résultat dans sa base de numération respective ;
un module configuré pour moduler la précision de codage des nombres, le module étant configuré pour :
selon qu'un nombre soit d'un type précis, coder tous les chiffres du nombre dans la première base de numération ;
selon qu'un nombre soit d'un type approximatif, coder tous les chiffres du nombre dans la deuxième base de numération ;
**caractérisé en ce que,** selon qu'un nombre soit d'un type codé mixte, le module est configuré pour coder certains des chiffres du nombre dans la première base de numération et les chiffres restants dans la deuxième base de numération.

2. Système selon la revendication 1, dans lequel chaque bloc logique comprend au moins un dispositif électronique en mesure de présenter un nombre, N, de niveaux logiques, où N est un nombre entier réel positif supérieur à deux et, éventuellement, ledit au moins un dispositif électronique comporte au moins un dispositif à une seule charge.

3. Système selon la revendication 1 ou la revendication 2, dans lequel le circuit logique comporte un additionneur.

4. Système selon l'une quelconque des revendications précédentes, dans lequel le circuit logique comporte un additionneur à anticipation de retenue, éventuellement un additionneur de Kogge-Stone.

5. Système selon l'une quelconque des revendications précédentes, dans lequel ledit au moins un bloc logique comporte au moins une porte de génération et de propagation.

6. Système selon l'une quelconque des revendications précédentes, dans lequel le contrôleur est configuré pour amener la pluralité de blocs logiques à faire sortir un résultat sous la forme d'une pluralité de chiffres correspondant à un ou plusieurs nombres, dans lequel chaque chiffre est dans l'une parmi la première base de numération ou la deuxième base de numération.

7. Système selon l'une quelconque des revendications précédentes, dans lequel la deuxième base de numération est à n-valeurs, où N est un nombre entier réel positif supérieur à deux, éventuellement quaternaire.

8. Système selon l'une quelconque des revendications précédentes, dans lequel la première base de numération et la deuxième base de numération ont au moins un ordre de grandeur commun.

9. Système de calcul approximatif comportant un système selon l'une quelconque des revendications 1 à 8.

10. Système selon l'une quelconque des revendications 1 à 8, comportant par ailleurs une mémoire qui comporte :
une pluralité de blocs de mémoire, chaque bloc de mémoire comportant au moins un dispositif électronique en mesure de présenter un nombre, N, d'états stables pour fournir un stockage de chiffres de niveaux logiques à valeurs multiples ; et
un contrôleur de mémoire configuré pour stocker et/ou extraire des chiffres en provenance des blocs de mémoire, dans lequel le contrôleur de mémoire est en mesure de fonctionner dans une première base de numération qui est binaire et une deuxième base de numération différente ayant plus de deux niveaux logiques.

11. Système selon la revendication 10, dans lequel la deuxième base de numération est à n-valeurs, éventuellement quaternaire.

12. Système selon la revendication 10 ou la revendication 11, dans lequel le contrôleur de mémoire est configuré pour stocker et/ou extraire un élément de données sous la forme d'une pluralité de chiffres, dans lequel chaque chiffre est stocké et/ou extrait dans l'une parmi la première base de numération ou la deuxième base de numération.
